# EUROPEAN PATENT APPLICATION

(11) **EP 1 469 324 A1**
(43) Date of publication of application: **20.10.2004**
(21) Application number: 03076129.0
(22) Date of filing: 16.04.2003
(51) Int. Cl.: G02B 5/04, G02B 27/10, G02B 27/14

(54) **An illumination device formed by cutting and laminating coated plates**

(71) Applicant: Université de Liège, 4020 Liège (BE)
(72) Inventor: Vandormael, Denis, Université de Liège, 4031 Angleur (BE); Habraken, Serge, Université de Liège, 4031 Angleur (BE)

(57) **Abstract**

An illumination device includes a composite body (26) produced from the lamination of a number of plastic plates (2) bonded together at interfaces that are provided with light-reflective selective coatings (10), the laminate being machined across preselected planes (20) to provide the desired angular orientation, whereby light entering the illumination device is deflected along parallel emergent paths.

## Description

This invention concerns improvements in or relating to the production of an illumination device.

In particular the present invention has reference to an illumination device of the kind described in our co-pending European Patent Application No EP 1 055 872 in which there is disclosed an illumination device including a plate for the guidance of an input light beam therethrough, the plate being formed internally thereof with a plurality of micro-prisms for receiving the light beam and for producing an output lightbeam from the input light beam.

An object of the present invention is to provide an improved method for the production of an illumination device.

A further object of the present invention is to provide an illumination device having an improved geometry for multiple light splitting.

According to a first aspect of the present invention a method for the production of an illumination device includes the steps of forming a laminated structure of individual plates of light transmitting material each plate being provided with a selective light-reflective coating, bonding the plates together, and cutting the laminated plates along predetermined angularly orientated planes to produce an illumination device comprising a composite body provided internally thereof with a series of selective light reflective-angularly arrayed coated surfaces.

The cutting of the laminated plates is effected by employing water-cooled machine cutting or any other appropriate technique that avoids to as great an extent as possible the formation of cracks caused by friction forces or thermal effects between the material and the bonding.

A further step in the method of production includes finishing such as polishing the faces of the composite body to the desired and required optical quality in terms of flatness and transparency.

The size of the composite body is chosen for the particular application intended for the illumination device.

The light transmitting material is conveniently of plastics and may be polymethylmethacrylate (PMMA), a thermoplastic or a thermosetting resin for example polyethylene terephthalate, polybutlyene terephthalate, polycarbonate, polyimide, polyacrylate, polyethersulfone, polyetherimide, or cellulose triacetate resins. As a preference the plastics material to be used is PMMA.

In the alternative the material from which the plates are made may be glass.

The plates may be bonded together using an optical glue, which may for example be one available under the trade name *'Norland Optical Adhesive'.*

The reflective coating on each plate may be a spectrally selective coating similar to a holographic filter, reflecting only a portion of the spectral components of the incoming light inside a bandwidth of, for instance, . 2nm to 200nm. The reflective coating on each plate may also be a spectrally insensitive and partially reflective coating.

According to a second aspect of the present invention there is provided an illumination device produced in accordance with the first aspect and including a composite body having two or more plates provided with a light-reflective selective coating and bonded one to the other along the contacting surfaces thereof, the composite body encapsulating a series of light-reflecting planes internally thereof.

An illumination device according to the second aspect is further provided with a prism overlying the light transmission paths from the internal light-reflecting planes for the purpose of ensuring that spectral components emerging from the composite body of the device are parallel one to the other in the absence of any deviation that might be occasioned by refraction. The prism is conveniently bonded to the device using an optical glue and may be of the same material from which the device is made.

In an alternative embodiment an illumination device according to the second aspect is further provided with a number of prisms each overlying a respective light transmission path from an associated internal light-reflecting plane. Similarly, the function of the prisms is to ensure that the spectral components emerging from the device do so in parallel without deviation. It will be appreciated that in deploying a number of prisms each dedicated to a respective light transmission path, the overall physical size of the device is minimised in comparison to the use of a single prism extending across all the light-reflecting planes.

By way of example only a method for producing an illumination device according to the invention is described below with reference to the accompanying drawings in which:

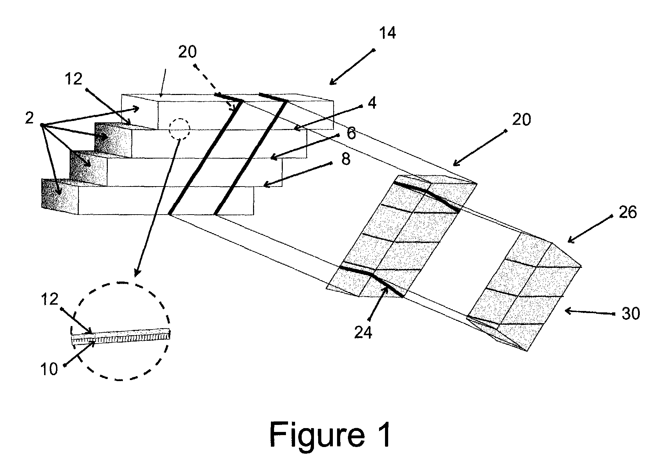

Figure 1 is a diagrammatic representation of the method;

Figure 2 is a diagrammatic view of a first embodiment of an illumination device produced by the method of the invention; and

Figure 3 is a diagrammatic view of a second embodiment of an illumination device produced by the method of the invention.

Referring to the drawings there is shown a number of plates 2 (four in this example) of plastics material, preferably made of polymethylmethacrylate (PMMA). The plates 2 are laminated by bonding at their interfaces 4, 6 and 8 and at each interface the surface of a plate 2 is coated with a spectrally selective coating 10 as can be seen in the magnified view of the interface. The bonding is achieved by the use of an optical glue forming a layer 12 again as can be seen in the magnified view.

Once the glue has hardened to provide a secure bond between the plates 2, cutting of the primary laminated composite body 14 can proceed. A first cutting occurs on an oblique plane 20 to give a secondary laminated composite body 22 and a second cutting on an oblique plane 24 yields a final tertiary composite body 26 that is to become the illumination device 30. The body 26 is produced with the requisite dimensions for the particular application designated therefor. In this example the length of the device is 30mm with a depth and width each of 5mm. The cutting of the plates is effected by water-cooled mechanical cutting or any other appropriate technique that avoids or minimises the risk of cracks propagating due to friction and other thermal reactions which could adversely influence the optical integrity of the device.

The final preparation of the device *per se* involves the finishing such as polishing of the external surfaces of the illumination device thus produced.

The illumination device is now constituted by a laminated composite body encapsulating several coatings on planes defined by the optically reflective coatings at the interfaces of the plates. The result of this formation is that the extraction efficiency can approximate to 100% for any polarisation of the incident light travelling through the device, whereas with earlier geometries this efficiency was highly dependent on the polarisation condition. Accordingly the diffraction efficiency of the illumination device of the present invention is largely independent of the polarisation and this beneficial result is realised by the presence of the angular orientation of the reflective surfaces or facets encapsulated in the device. The coating is spectrally selective and reflects only a portion of the incoming light (spectral or geometric).

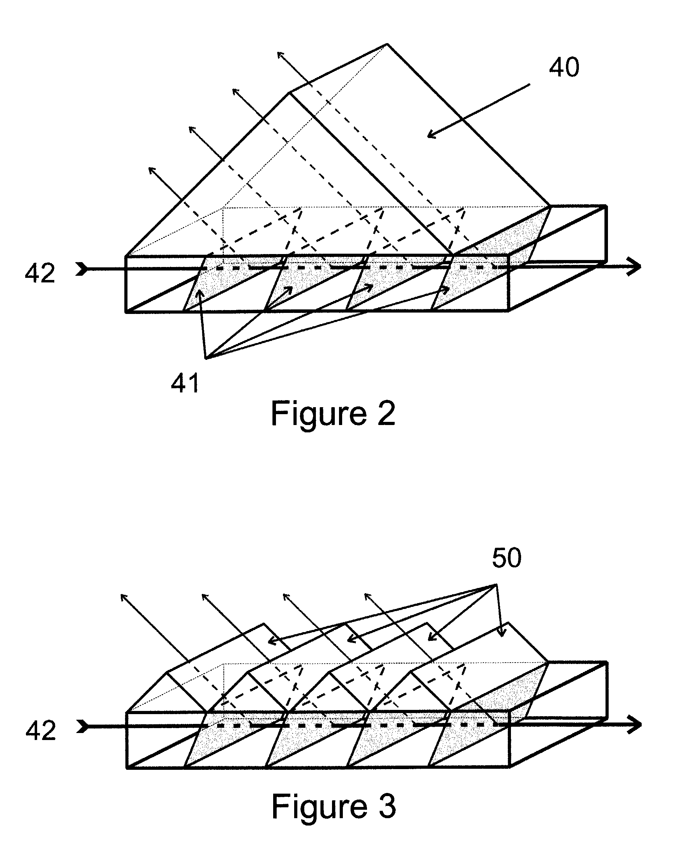

Referring to Figure 2 of the accompanying drawings there is shown the illumination device of the present invention with a large prism 40 superposed thereon in such manner that it extends across and covers the reflective surfaces or planes 41 within the device. Light enters the device on the path 42. The purpose of the prism 40 is to ensure that each emergent spectral component is parallel to each of the other components without deviation by virtue of refraction. The prism 40 is bonded by optical glue to the illumination device.

Referring now to Figure 3 there is shown an alternative arrangement for ensuring parallelism of the emergent spectral components. In this embodiment a number of smaller prisms 50 is deployed and corresponds to the number of reflective spectral surfaces in the device. The deployment of the smaller prisms significantly reduces the overall dimensions of the combination.

The present invention thus provides a novel and inventive method for producing an illumination device incorporating a laminate structure in which the interfaces of the plates constituting the laminate provide the selective reflective surfaces with appropriate coatings.

The instant invention provides a compact and robust illumination device suitable for a wide range of applications.

## Claims

1. A method for the production of an illumination device **characterised by** the steps of forming a laminated structure of individual plates (2) of light transmitting material each plate being provided with a selective light-reflective coating (10), bonding the plates (2) together, and cutting the laminated plates (2) along predetermined angularly orientated planes (20, 24)) to produce an illumination device comprising a composite body (26) provided internally thereof with a series of selective light reflective-angularly arrayed coated surfaces (4, 6, 8).

2. A method according to Claim 1 **characterised in that** the step of cutting the laminated plates (2) is effected in such manner as to minimise frictional or other stresses.

3. A method according to Claim 1 or 2 **characterised in that** the faces of the composite body are subjected to finishing.

4. A method according to any one of the preceding claims **characterised in that** the light transmitting material is a plastics material.

5. A method according to any one of the preceding Claims 1 to 3 **characterised in that** the light transmitting material is glass.

6. A method according to any one of the preceding claim **characterised in that** the plates (2) are bonded together using an optical glue.

7. A method according to any one of the preceding claims **characterised in that** the reflective coating (10) is a spectrally reflective coating.

8. A method according to any one of claim 1 to 6 **characterised in that** the reflective coating (10) is a spectrally insensitive and partially reflective coating.

9. An illumination device produced by the method according to any one of the preceding claims **characterised in that** the device includes a composite body having two or more plates (2) provided with a light-reflective selective coating (10) and bonded one to the other along contacting surfaces thereof, the composite body encapsulating a series of light-reflecting planes internally thereof.

10. An illumination device according to Claim 9 **characterised in that** the device is provided with a prism (40) overlying the light transmission pats from the internal light-reflecting planes.

11. An illumination device according to Claim 10 **characterised in that** the prism is bonded to the device.

12. An illumination device according to Claim 9 **characterised in that** the device is provided with a number of prisms (50) each overlying a respective light transmission path from an associated internal light-reflecting plane.
